# EUROPEAN PATENT APPLICATION

(11) **EP 4 575 559 A1**
(43) Date of publication of application: **25.06.2025**
(21) Application number: 24221757.8
(22) Date of filing: 19.12.2024
(51) Int. Cl.: G01S 7/48, G01S 7/497, G01S 17/86, G01S 17/89, G01S 17/931, G06V 10/774, G06V 20/58

(54) **METHOD FOR LABELING AT LEAST ONE SPECIFIC OBJECT BY AUTOMATICALLY CREATING AT LEAST ONE SPECIFIC PSEUDO 3D BOUNDING BOX AND COMPUTING DEVICE USING THE SAME**

(30) Priority: 21.12.2023 KR 20230189015; 12.11.2024 KR 20240160584
(71) Applicant: Stradvision, Inc., Pohang-si 37668 (KR)
(72) Inventor: LEE, Damin, 01849 Seoul (KR); YU, Dong Kyu, 16829 Yongin-si (KR)
(74) Representative: V.O.

(57) **Abstract**

There is provided a method for labeling one or more specific objects by automatically creating one or more specific pseudo 3D bounding boxes. The method includes steps of: (a) acquiring each of projected 3D LiDAR bounding boxes on an image coordinate system using raw data and determining whether each of the projected 3D LiDAR bounding boxes is matched with each of 2D GT bounding boxes on the image coordinate system; and (b) if matched, performing regression process to fit each of the 1-st projected 3D LiDAR bounding boxes into each of the 1-st 2D GT bounding boxes; and if not matched, generating each of the specific pseudo 3D bounding boxes using each of the 2-nd 2D GT bounding boxes and its average size, and rotational information, and performing the regression process to fit each of the pseudo 3D bounding boxes into each of the 2-nd 2D GT bounding boxes.

## Description

This present application claims the benefits of the earlier filing dates of Korean provisional patent application No. 10-2023-0189015 filed on December 21, 2023, and Korean non-provisional patent application No. 10-2024-0160584 filed on November 12, 2024, the entire contents of which being incorporated herein by reference.

The present disclosure relates to a method for labeling at least one specific object by automatically generating at least one pseudo 3D bounding box and a computing device using the same.

There are lots of researches on object recognition using machine learning technologies. As one of the machine learning technologies, Deep Learning for training a neural network, which includes an input layer, an output layer and multiple hidden layers between the input layer and the output layer, achieves an impressive recognition performance.

The Deep Learning using the neural network performs learning process normally through a backpropagation algorithm using loss values. To this end, the Deep Learning requires multiple labeled data, i.e., training data assigned with tags using labeling tools. Since pointing devices can be used as the labeling tools to generate the labeled data, e.g., 3D bounding boxes, cost for developing the labeling tools is not burdensome.

However, in case the labeled data are generated by using conventional labeling tools such as the pointing devices, since labeling workers should use the pointing devices to generate the 3D bounding boxes, the labeling workers may be distracted during repetitive labeling processes and thus often make mistakes. Further, even if educational courses related to labeling processes are preliminarily provided to the labeling workers, the educational courses cannot prevent mistakes of the labeling workers during the repetitive labeling processes completely, and therefore the labeled data acquired from the labeling processes should be inspected and thus a cost for inspecting the labeled data may be much increased.

A labeling worker may drag a pointing device to generate 2D bounding boxes for objects while checking the objects in images, whereas the labeling worker should set a size of the 3D bounding boxes, i.e. width, height, and length, and rotational information of the 3D bounding boxes, i.e. roll, pitch, and yaw, while checking three-dimensional Cartesian coordinates of the objects, i.e. x, y, and z. But, setting the size and the rotational information of the 3D bounding boxes is more difficult compared to generating the 2D bounding boxes. Thus, it may take a longer time to generate the 3D bounding boxes for the objects than to generate the 2D bounding boxes for the same objects.

Accordingly, technology for solving the problems above is demanded.

It is an object of the present disclosure to solve all the aforementioned problems.

It is another object of the present disclosure to acquire each of one or more projected 3D LiDAR bounding boxes on an image coordinate system by using raw data including LiDAR data, image data and calibration data, (i) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, to perform a regression process on each of the 1-st projected 3D LiDAR bounding boxes for fitting each of the 1-st projected 3D LiDAR bounding boxes into each of the 1-st 2D GT bounding boxes and (ii) in response to detecting that each of one or more 2-nd 2D GT bounding boxes among the 2D GT bounding boxes is not matched with any one of the projected 3D LiDAR bounding boxes, to generate each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes and then performing the regression process on each of the pseudo 3D bounding boxes for fitting each of the pseudo 3D bounding boxes into each of the 2-nd 2D GT bounding boxes.

In accordance with one example embodiment of the present disclosure, there is a method for labeling one or more specific objects by automatically creating one or more specific pseudo 3D bounding boxes, comprising steps of: (a) a computing device acquiring each of one or more projected 3D LiDAR bounding boxes on an image coordinate system by using raw data including LiDAR data, image data and calibration data, and determining whether each of the projected 3D LiDAR bounding boxes is matched with each of one or more 2D GT bounding boxes on the image coordinate system; and (b) the computing device executing sub-processes of (b1) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, the computing device performing a regression process on each of the 1-st projected 3D LiDAR bounding boxes for fitting each of the 1-st projected 3D LiDAR bounding boxes into each of the 1-st 2D GT bounding boxes, and (b2) in response to detecting that each of one or more 2-nd 2D GT bounding boxes among the 2D GT bounding boxes is not matched with any one of the projected 3D LiDAR bounding boxes, the computing device generating each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes and then performing the regression process on each of the pseudo 3D bounding boxes for fitting each of the pseudo 3D bounding boxes into each of the 2-nd 2D GT bounding boxes.

As one example, at the step (a), the computing device (i) inputs the LiDAR data in the raw data into a 3D LiDAR model, to thereby instruct the 3D LiDAR model to generate each of one or more 3D LiDAR bounding boxes on a vehicle coordinate system, (ii) acquires each of the projected 3D LiDAR bounding boxes by projecting each of the 3D LiDAR bounding boxes onto the image coordinate system based on each of the 3D LiDAR bounding boxes and the calibration data in the raw data, (iii) generates each of 2D LiDAR bounding boxes by referring to each minimum value and each maximum value of each coordinate of each of the projected 3D LiDAR Bounding boxes, and (iv) applies a Hungarian algorithm using IOU(Intersection over Union) metric to thereby detect whether each of the 2D LiDAR bounding boxes and each of the 2D GT bounding boxes are matched with each other.

As one example, at the sub-process (b1), the computing device (i) generates each of 1-st 2D LiDAR bounding boxes by referring to each minimum value and each maximum value of each coordinate of each of the 1-st projected 3D LiDAR bounding boxes, (ii) calculates a 1-st IOU loss, which represents a loss related to each of matching ratios between each of the 1-st 2D LiDAR bounding boxes and each of the 1-st 2D GT bounding boxes, by applying IOU metric to each of the 1-st 2D LiDAR bounding boxes and each of the 1-st 2D GT bounding boxes, (iii) calculates a 1-st center loss which is a loss generated based on each difference between each center point of each of the 1-st projected 2D bounding boxes and each center point of each of the 1-st 2D GT bounding boxes, (iv) generates a 1-st integrated loss based on the 1-st IOU loss and the 1-st center loss, (v) performs the regression process based on the 1-st integrated loss by fitting each of the 1-st 2D LiDAR bounding boxes, and (vi) updates parameters of a 3D LiDAR model through backpropagation based on the 1-st integrated loss, wherein the 3D LiDAR model is configured to generate each of one or more 3D LiDAR bounding boxes on a vehicle coordinate system after the LiDAR data in the raw data are inputted.

As one example, at the sub-process (b2), the computing device (i) acquires each of x-axis values and each of y-axis values related to each piece of positional information of each of 2D bounding boxes on the image coordinate system for each of the 2-nd 2D GT bounding boxes by referring to each of the 2-nd 2D GT bounding boxes, (ii) acquires each of z-axis values related to each piece of the positional information of each of the 2D bounding boxes on the image coordination system by referring to each piece of depth information of each piece of the positional information of each of the 2D bounding boxes on the LiDAR data in the raw data, (iii) determines each piece of predicted positional information of each of 3D bounding boxes corresponding to each of the specific objects by referring to each piece of the positional information of each of the 2D bounding boxes, (iv) acquires each of average widths, average lengths and average heights corresponding to each of specific object classes pre-calculated by the 3D LiDAR model based on each of the specific object classes corresponding to each of the specific objects, wherein each of the specific object classes is confirmed through each of the 2-nd 2D GT bounding boxes and wherein the 3D LiDAR model is configured to generate each of one or more 3D LiDAR bounding boxes on a vehicle coordinate system after the LiDAR data in the raw data are inputted, (v) determines each piece of the average size information of each of the specific objects by referring to each of the average widths, the average lengths, and the average heights corresponding to each of the specific object classes, (vi) inputs the image data, among the raw data, to a yaw regression model to thereby instruct the yaw regression model to output each of 1-st rotational angles for each of the specific objects on a camera coordinate system, (vii) converts each of the 1-st rotational angles into each of 2-nd rotational angles for each of the specific objects on the vehicle coordinate system by referring to each of the 1-st rotational angles and the calibration data in the raw data, to thereby determine each piece of the rotational information for each of the specific objects, and (viii) generates each of the specific pseudo 3D bounding boxes by referring to each piece of the predicted positional information and each piece of the average size information and the rotational information for each of the specific objects.

As one example, at the sub-process (b2), the computing device inputs the image data into the yaw regression model, to thereby instruct the yaw regression model to (i) output each of multiple features, (ii) classify each heading direction of each of the specific objects into each specific multi-bin class among multiple multi-bin classes through each yaw class header after the yaw regression model applies concatenation operations and convolution operations to each of the multiple features, (iii) acquire each of 3-rd rotational angles, which is each rotation angle of each of the specific objects from each of specific reference angles, corresponding to each of the specific objects, among each of reference angles predetermined to correspond to each of the multiple multi-bin classes, (iv) acquire each of specific sign values corresponding to each of the heading directions of each of the specific objects through each of yaw delta headers by referring to each of multiple sign values predetermined based on each of the reference angles of each of the multiple multi-bin classes, (v) acquire each of 3-rd adjusted rotational angles by assigning each of the specific sign values to each of the 3-rd rotational angles, and (vi) predict each of the 1-st rotational angles for each of the specific objects based on each of the 3-rd adjusted rotational angles and the specific reference angles.

As one example, at the sub-process (b2), in response to detecting that each of the specific pseudo 3D bounding boxes is generated, the computing device (i) calculates each of matching ratios between each of the specific pseudo 3D bounding boxes and each of the 2-nd 2D GT bounding boxes by using IOU metric, and (ii) if some part of the matching ratios is below a predefined threshold, performs the regression process on some part of the specific pseudo 3D bounding boxes corresponding to the some part of the matching ratios.

As one example, at the sub-process (b2), the computing device (i) generates each of specific pseudo 2D bounding boxes by referring to each minimum value and each maximum value of coordinates of each of the specific pseudo 3D bounding boxes, (ii) calculates a 2-nd IOU loss, which represents a loss related to each of matching ratios between each of the specific pseudo 2D bounding boxes and each of the 2-nd 2D GT bounding boxes, acquired by applying the IOU metric to each of the specific pseudo 2D bounding boxes and each of the 2-nd 2D GT bounding boxes, (iii) calculates a 2-nd center loss generated based on each difference between each center point of each of the specific pseudo 2D bounding boxes and each center point of each of the 2-nd 2D GT bounding boxes, (iv) generates a 2-nd integrated loss by referring to the 2-nd IOU loss and the 2-nd center loss, and (v) performs the regression process on each of the specific pseudo 2D bounding boxes by fitting each of the specific pseudo 2D bounding boxes based on the 2-nd integrated loss.

As one example, at the sub-process (b2), in response to detecting that each of one or more 2-nd projected 3D LiDAR bounding boxes among the projected 3D LiDAR bounding boxes is not matched with any of the 2D GT bounding boxes, the computing device deletes each of the 2-nd projected 3D LiDAR bounding boxes.

As one example, at the step (a), the calibration data include one or more intrinsic parameters and one or more extrinsic parameters of a camera and each transformation parameter for converting each of the LiDAR data into each of the image data.

As one example, each of the 2D GT bounding boxes is obtained based on data generated by acquiring the image data from a camera, detecting each of the specific objects in the image data, and generating each of the 2D bounding boxes for each of the specific objects, through a deep learning model.

In accordance with another example embodiment of the present disclosure, there is provided a computing device for labeling one or more specific objects by automatically creating one or more specific pseudo 3D bounding boxes, comprising: at least one memory which saves instructions; and at least one processor configured to execute the instructions to perform or support another device to perform processes of: (I) acquiring each of one or more projected 3D LiDAR bounding boxes on an image coordinate system by using raw data including LiDAR data, image data and calibration data, and determining whether each of the projected 3D LiDAR bounding boxes is matched with each of one or more 2D GT bounding boxes on the image coordinate system; and (II) executing sub-processes of (II_1) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, performing a regression process on each of the 1-st projected 3D LiDAR bounding boxes for fitting each of the 1-st projected 3D LiDAR bounding boxes into each of the 1-st 2D GT bounding boxes, and (II_2) in response to detecting that each of one or more 2-nd 2D GT bounding boxes among the 2D GT bounding boxes is not matched with any one of the projected 3D LiDAR bounding boxes, generating each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes, and then performing the regression process on each of the pseudo 3D bounding boxes for fitting each of the pseudo 3D bounding boxes into each of the 2-nd 2D GT bounding boxes.

As one example, at the process (I), the processor (i) inputs the LiDAR data in the raw data into a 3D LiDAR model, to thereby instruct the 3D LiDAR model to generate each of one or more 3D LiDAR bounding boxes on a vehicle coordinate system, (ii) acquires each of the projected 3D LiDAR bounding boxes by projecting each of the 3D LiDAR bounding boxes onto the image coordinate system based on each of the 3D LiDAR bounding boxes and the calibration data in the raw data, (iii) generates each of 2D LiDAR bounding boxes by referring to each minimum value and each maximum value of each coordinate of each of the projected 3D LiDAR Bounding boxes, and (iv) applies a Hungarian algorithm using IOU(Intersection over Union) metric to thereby detect whether each of the 2D LiDAR bounding boxes and each of the 2D GT bounding boxes are matched with each other.

As one example, at the sub-process (II_1), the processor (i) generates each of 1-st 2D LiDAR bounding boxes by referring to each minimum value and each maximum value of each coordinate of each of the 1-st projected 3D LiDAR bounding boxes, (ii) calculates a 1-st IOU loss, which represents a loss related to each of matching ratios between each of the 1-st 2D LiDAR bounding boxes and each of the 1-st 2D GT bounding boxes, by applying IOU metric to each of the 1-st 2D LiDAR bounding boxes and each of the 1-st 2D GT bounding boxes, (iii) calculates a 1-st center loss which is a loss generated based on each difference between each center point of each of the 1-st projected 2D bounding boxes and each center point of each of the 1-st 2D GT bounding boxes, (iv) generates a 1-st integrated loss based on the 1-st IOU loss and the 1-st center loss, (v) performs the regression process based on the 1-st integrated loss by fitting each of the 1-st 2D LiDAR bounding boxes, and (vi) updates parameters of a 3D LiDAR model through backpropagation based on the 1-st integrated loss, wherein the 3D LiDAR model is configured to generate each of one or more 3D LiDAR bounding boxes on a vehicle coordinate system after the LiDAR data in the raw data are inputted.

As one example, at the sub-process (II_2), the processor (i) acquires each of x-axis values and each of y-axis values related to each piece of positional information of each of 2D bounding boxes on the image coordinate system for each of the 2-nd 2D GT bounding boxes by referring to each of the 2-nd 2D GT bounding boxes, (ii) acquires each of z-axis values related to each piece of the positional information of each of the 2D bounding boxes on the image coordination system by referring to each piece of depth information of each piece of the positional information of each of the 2D bounding boxes on the LiDAR data in the raw data, (iii) determines each piece of predicted positional information of each of 3D bounding boxes corresponding to each of the specific objects by referring to each piece of the positional information of each of the 2D bounding boxes, (iv) acquires each of average widths, average lengths and average heights corresponding to each of specific object classes pre-calculated by the 3D LiDAR model based on each of the specific object classes corresponding to each of the specific objects, wherein each of the specific object classes is confirmed through each of the 2-nd 2D GT bounding boxes and wherein the 3D LiDAR model is configured to generate each of one or more 3D LiDAR bounding boxes on a vehicle coordinate system after the LiDAR data in the raw data are inputted, (v) determines each piece of the average size information of each of the specific objects by referring to each of the average widths, the average lengths, and the average heights corresponding to each of the specific object classes, (vi) inputs the image data, among the raw data, to a yaw regression model to thereby instruct the yaw regression model to output each of 1-st rotational angles for each of the specific objects on a camera coordinate system, (vii) converts each of the 1-st rotational angles into each of 2-nd rotational angles for each of the specific objects on the vehicle coordinate system by referring to each of the 1-st rotational angles and the calibration data in the raw data, to thereby determine each piece of the rotational information for each of the specific objects, and (viii) generates each of the specific pseudo 3D bounding boxes by referring to each piece of the predicted positional information and each piece of the average size information and the rotational information for each of the specific objects.

As one example, at the sub-process (II_2), the processor inputs the image data into the yaw regression model, to thereby instruct the yaw regression model to (i) output each of multiple features, (ii) classify each heading direction of each of the specific objects into each specific multi-bin class among multiple multi-bin classes through each yaw class header after the yaw regression model applies concatenation operations and convolution operations to each of the multiple features, (iii) acquire each of 3-rd rotational angles, which is each rotation angle of each of the specific objects from each of specific reference angles, corresponding to each of the specific objects, among each of reference angles predetermined to correspond to each of the multiple multi-bin classes, (iv) acquire each of specific sign values corresponding to each of the heading directions of each of the specific objects through each of yaw delta headers by referring to each of multiple sign values predetermined based on each of the reference angles of each of the multiple multi-bin classes, (v) acquire each of 3-rd adjusted rotational angles by assigning each of the specific sign values to each of the 3-rd rotational angles, and (vi) predict each of the 1-st rotational angles for each of the specific objects based on each of the 3-rd adjusted rotational angles and the specific reference angles.

As one example, at the sub-process (II_2), in response to detecting that each of the specific pseudo 3D bounding boxes is generated, the processor (i) calculates each of matching ratios between each of the specific pseudo 3D bounding boxes and each of the 2-nd 2D GT bounding boxes by using IOU metric, and (ii) if some part of the matching ratios is below a predefined threshold, performs the regression process on some part of the specific pseudo 3D bounding boxes corresponding to the some part of the matching ratios.

As one example, at the sub-process (II_2), the processor (i) generates each of specific pseudo 2D bounding boxes by referring to each minimum value and each maximum value of coordinates of each of the specific pseudo 3D bounding boxes, (ii) calculates a 2-nd IOU loss, which represents a loss related to each of matching ratios between each of the specific pseudo 2D bounding boxes and each of the 2-nd 2D GT bounding boxes, acquired by applying the IOU metric to each of the 2-nd 2D GT bounding boxes, (iii) calculates a 2-nd center loss generated based on each of differences between each center point of each of the specific pseudo 2D bounding boxes and each center point of each of the 2-nd 2D GT bounding boxes, (iv) generates a 2-nd integrated loss by referring to the 2-nd IOU loss and the 2-nd center loss, and (v) performs the regression process on each of the specific pseudo 2D bounding boxes by fitting each of the specific pseudo 2D bounding boxes based on the 2-nd integrated loss.

As one example, at the sub-process (II_2), in response to detecting that each of one or more 2-nd projected 3D LiDAR bounding boxes among the projected 3D LiDAR bounding boxes is not matched with any of the 2D GT bounding boxes, the processor deletes each of the 2-nd projected 3D LiDAR bounding boxes.

As one example, at the process (I), the calibration data include one or more intrinsic parameters and one or more extrinsic parameters of a camera and each transformation parameter for converting each of the LiDAR data into each of the image data.

As one example, each of the 2D GT bounding boxes is obtained based on data generated by acquiring the image data from a camera, detecting each of the specific objects in the image data, and generating each of the 2D bounding boxes for each of the specific objects, through a deep learning model.

The above and other objects and features of the present disclosure will become apparent from the following description of preferred embodiments given in conjunction with the accompanying drawings.

The following drawings to be used to explain example embodiments of the present disclosure are only part of example embodiments of the present disclosure and other drawings can be obtained based on the drawings by those skilled in the art of the present disclosure without inventive work.
Fig. 1 is a drawing schematically illustrating a configuration of a computing device for labeling at least one specific object by automatically generating at least one specific pseudo 3D bounding box.
Fig. 2 is a flow chart schematically illustrating a process of automatically generating the specific pseudo 3D bounding box to thereby label the specific object.
Fig. 3 is a drawing schematically illustrating examples of 3D LiDAR bounding boxes generated by using a 3D LiDAR model.
Fig. 4 is a flow chart schematically illustrating a process of confirming whether each of the 3D LiDAR bounding boxes is matched with each of 2D GT bounding boxes on an image coordinate system.
Fig. 5 is a flow chart schematically illustrating a process of regressing each of projected 3D LiDAR bounding boxes to thereby fit each of the projected 3D LiDAR bounding boxes to its corresponding 2D GT bounding box.
Fig. 6 is a flow chart schematically illustrating a process of generating each of the specific pseudo 3D bounding boxes for each of the specific objects where each of the 3D LiDAR bounding boxes is not generated but each of the 2D GT bounding boxes is generated.
Fig. 7 is a drawing schematically illustrating a process of predicting yaw, which represents an angle of rotation of a vehicle on a vehicle coordinate system, by using an alpha, which represents an angle of rotation of the vehicle on a camera coordinate system.
Fig. 8 is a drawing schematically illustrating an architecture of a yaw regression model configured to predict the alpha.
Fig. 9 is a drawing schematically illustrating results of generating the projected 3D LiDAR bounding boxes before and after applying the processes of the present invention.

The following detailed description of the present disclosure refers to the accompanying drawings, which show by way of illustration a specific embodiment in which the present disclosure may be practiced, in order to clarify the objects, technical solutions and advantages of the present disclosure. These embodiments are described in sufficient detail to enable those skilled in the art to practice the present disclosure.

Besides, in the detailed description and claims of the present disclosure, a term "include" and its variations are not intended to exclude other technical features, additions, components, or steps. Other objects, benefits and features of the present disclosure will be revealed to one skilled in the art, partially from the specification and partially from the implementation of the present disclosure. The following examples and drawings will be provided as examples, but they are not intended to limit the present disclosure.

Moreover, the present disclosure covers all possible combinations of example embodiments indicated in this specification. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained by referring to attached diagrams in detail as shown below.

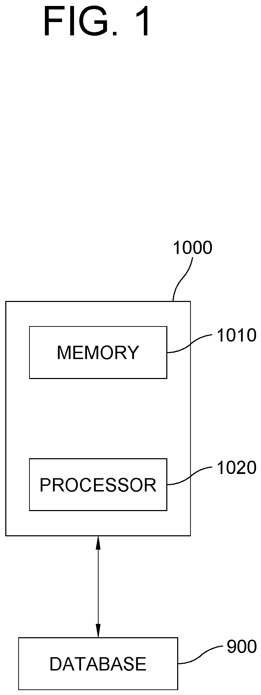

Fig. 1 is a drawing schematically illustrating a configuration of a computing device for labeling at least one specific object by automatically generating at least one specific pseudo 3D bounding box.

By referring to Fig. 1, the computing device 1000 includes at least one memory 1010 which stores one or more instructions for labeling one or more specific objects by automatically generating one or more specific pseudo 3D bounding boxes and one or more processors 1020 which automatically generate one of the specific pseudo 3D bounding boxes to be used for labeling at least one of the specific objects according to the instructions in the memory 1010. Further, the computing device 1000 may represent a personal computer, a mobile computer, etc.

Specifically, any combination of a computing hardware and a computing software may be configured as the computing device 1000 for achieving a required systematic performance for the method of the presented invention. The computing hardware may include at least one type of components among following types: a computing processor, a memory, a storage, an input device, an output device, and other components included by existing computing devices; and an electronic telecommunication device such as router and switch; and an electronic data storage system such as network-attached storage and storage area network. Also, the computing software may include the instructions which support the computing device 1000 to function in specific ways.

Further, the processor 1020 of the computing device 1000 may include following hardware components: a micro processing unit, i.e., MPU, a central processing unit, i.e., CPU, a cache memory, and a data bus. Further, the computing device 1000 may also include following software components: at least one operation system and at least one application for specific purposes.

However, the computing device 1000 may also include at least one integrated processor which is an integration of a medium processor and at least one memory.

Also, the computing device 1000 may be interlinked with at least one database 900 which stores information to be used for labeling at least one of the specific objects by automatically generating at least one of the specific pseudo 3D bounding boxes. Herein, the database 900 may include at least one type of storage medium among following types: a flash memory type, a hard disk type, a multimedia card micro type, a card type memory (for instance, an SD memory or an XD memory), a random-access memory, i.e., RAM, a static random-access memory, i.e., SRAM, a read-only memory, i.e., ROM, an electrically erasable programmable read-only memory, i.e., EEPROM, a magnetic memory, a magnetic disk, an optical disk, but it is not limited thereto, such that the database also include all storage mediums capable of saving data. Also, the database 900 may be configured in a separated place from the computing device 1000. In contrary, the database 900 may also be configured inside the computing device 1000 to send data to the computing device 1000 or to write received data. For convenience, the number of the database 900 may be one but two or more as the case may be.

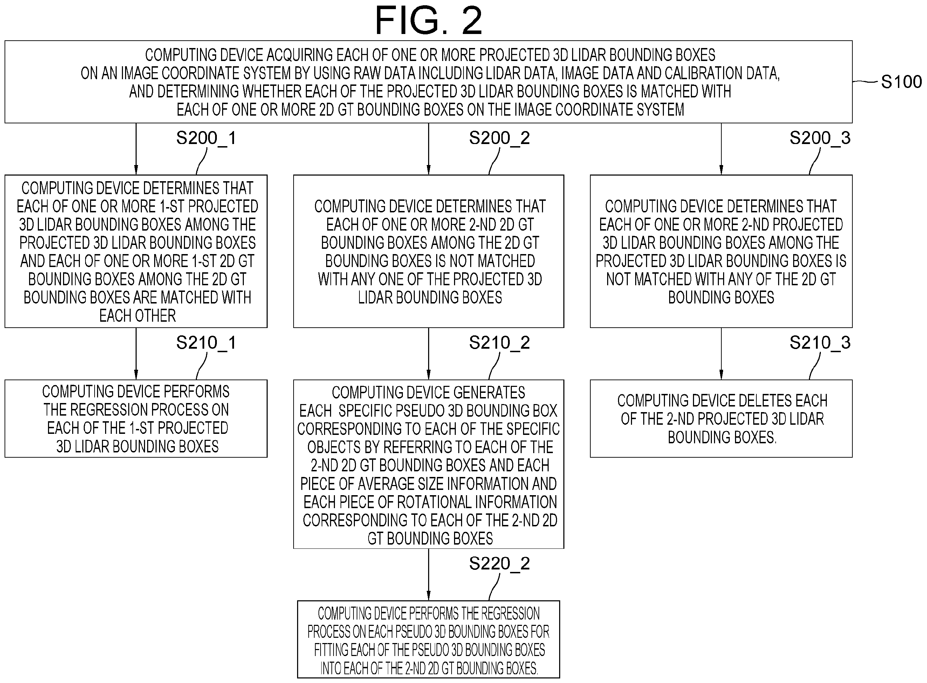

Fig. 2 is a flow chart schematically illustrating a process of automatically generating the specific pseudo 3D bounding box to thereby label the specific object.

First, by referring to Fig. 2, the computing device 1000 may acquire each of one or more projected 3D LiDAR bounding boxes on an image coordinate system by using raw data which may include image data, LiDAR data and calibration data. Then, the computing device 1000 may determine whether each of the projected 3D LiDAR bounding boxes is matched with each of one or more 2D GT bounding boxes on the image coordinate system at a step of S100.

As one example, the computing device 1000 may input the LiDAR data into a 3D LiDAR model to thereby instruct the 3D LiDAR model to generate each 3D LiDAR bounding box for its corresponding object included in the LiDAR data, through operations of the 3D LiDAR model. In addition, the computing device 1000 may input the image data acquired from the camera into SVNet3 to thereby instruct the SVNet3 to generate each of one or more 2D GT bounding boxes for its corresponding object on the image coordinate system. Herein, the SVNet3 is a deep learning model which can detect the object(s) from the image data generated by a camera and then generate the 2D bounding box(es) (serving as the 2D GT bounding box(es)) corresponding to the detected object(s). Since the SVNet3 has a high degree of accuracy in detecting various objects, various 2D bounding boxes acquired by the SVNet3 for the objects can be considered as the 2D GT bounding boxes, but it is not limited thereto. As another example, each of the GT 2D bound boxes can be acquired from other deep learning models which are configured to generate each of the bounding boxes with higher precision than the LiDAR model.

As another example, on condition that the computing device 1000 stores each of the 3D LiDAR bounding boxes and each of the 2D GT bounding boxes (generated by each 3D LiDAR model and SVNet3) on the database 900, the computing device 1000 may acquire each of the 3D LiDAR bounding boxes and each of the 2D GT bounding boxes from the database 900.

For reference, the calibration data may include one or more intrinsic parameters of a camera, one or more extrinsic parameters of the camera, and transformation parameters for converting the LiDAR data into the image data. Also, the image coordinate system may refer to an ICS (Image Coordinate System) which is a two-dimensional coordinate system defining the top-left corner of the image acquired from the camera as its origin, but it is not limited thereto.

Further, the computing device 1000 may match each of the 3D LiDAR bounding boxes outputted from 3D LiDAR model and each of the 2D GT bounding boxes (on the image data), i.e., the data outputted from the SVNet3 model in response to acquiring the image data from the camera, thereby confirming whether each of the 3D LiDAR bounding boxes and each of the 2D GT bounding boxes are matched with each other. Herein, the computing device 1000 may project each of the 3D LiDAR bounding boxes onto the image coordinate system to thereby acquire each of one or more projected 3D LiDAR bounding boxes and then the computing device 1000 may confirm whether each of the projected 3D LiDAR bounding boxes and its corresponding each of the 2D GT bounding boxes are matched with each other, but it is not limited thereto.

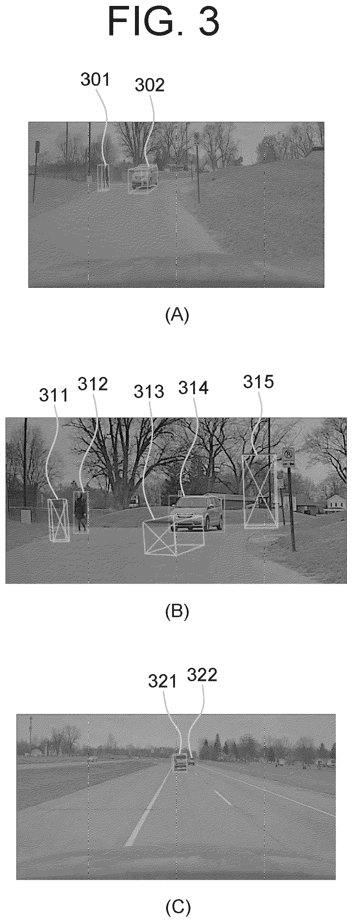

In accordance with present disclosure, examples of the 3D LiDAR bounding boxes outputted from the 3D LiDAR model are provided by referring to Fig. 3.

Fig. 3 is a drawing schematically illustrating examples of 3D LiDAR bounding boxes generated by using the 3D LiDAR model.

By referring to Fig. 3, the 3D bounding boxes 301, 302, 311, 313, 315, and 321 shown in (A) to (C) are results of projecting each of the 3D LiDAR bounding boxes (included in the LiDAR data outputted from the 3D LiDAR model) onto the image coordinate system by using the calibration data. For reference, it should be understood that (A) and (C) of Fig. 3 do not illustrate some of the 2D GT bounding boxes each of which is exactly matched with its corresponding projected 3D LiDAR bounding box for better understanding.

By referring to (A) of Fig. 3, two projected 3D LiDAR bounding boxes 301 and 302 each of which corresponds to a human and a vehicle are shown. Further, by referring to (B) of Fig. 3, each of the projected 3D LiDAR bounding boxes 311 and 313 is generated at a distance from each of the 2D GT bounding boxes 312 and 314 corresponding to each of the human and the vehicle due to the inaccurate calibration data in the raw data. Also, in (B) of Fig. 3, at a right side of the 2D GT bounding box 314, there is a projected 3D LiDAR bounding box 315 corresponding to a false positive object. Furthermore, by referring to (C) of Fig. 3, the projected 3D LiDAR bounding box 321 corresponding to an object at a relatively short distance is generated. But no projected 3D LiDAR bounding box corresponding to another object 322 at a relatively long distance is generated and thus said another object is considered as a false negative case due to few point cloud data of the LiDAR corresponding to said another object.

Thus, for the projected 3D LiDAR bounding boxes 311, 313, 315, and 321 shown in (B) and (C) of Fig. 3, there are problems as follows: (i) each of the projected 3D LiDAR bounding boxes 311 and 313 is located at a certain distance from its corresponding 2D GT bounding boxes 312 and 314, (ii) the projected 3D LiDAR bounding box 315 is generated for the false positive object, or (iii) no projected 3D LiDAR bounding box is generated for the undetected object 322. Thus, it is necessary to resolve these problems because they are not suitable as training data.

By referring to Fig. 2 again, according to each result of matching between each of the projected 3D LiDAR bounding boxes and each of the 2D GT bounding boxes, there may be three cases. Processes for the three cases are explained as follows.

As one example, the computing device 1000 may determine that each of one or more 1-st projected 3D LiDAR bounding boxes among the projected 3D LiDAR bounding boxes is matched with each of one or more 1-st 2D GT bounding boxes among the 2D GT bounding boxes at a step of S200_1.

That is, it is a case in which each of the 1-st projected 3D LiDAR bounding boxes and its corresponding each of the 1-st 2D GT bounding boxes are at least partially overlapped. In this case, the computing device 1000 may determine that each of the 1-st objects related to each of the 1-st projected 3D LiDAR bounding boxes is same as its corresponding each of the 1-st objects related to each of the 1-st GT 2D bonding boxes, even though each position of each of the 1-st projected 3D LiDAR bounding boxes and each position of each of the 1-st GT 2D bonding boxes are not exactly matched with each other due to the inaccurate calibration data.

Then, in response to determining that each of the 1-st projected 3D LiDAR bounding boxes is matched with its corresponding each of the 1-st 2D GT bounding boxes, the computing device 1000 may perform a regression process on each of the 1-st projected 3D LiDAR bounding boxes at a step of S210_1.

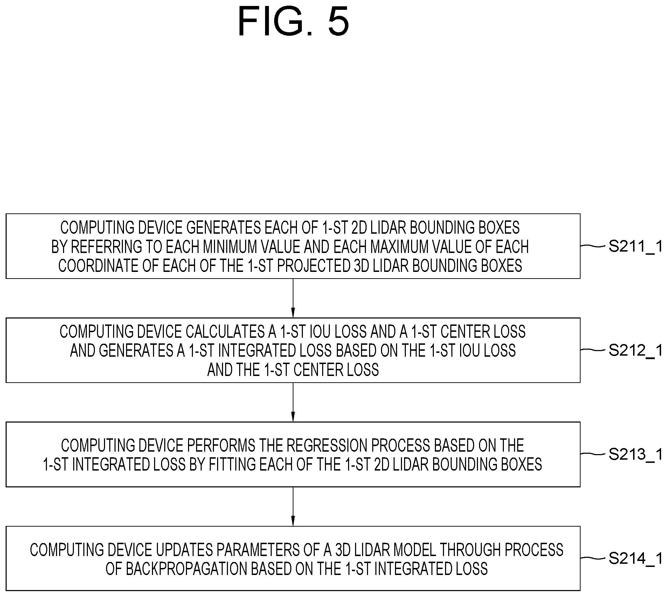

Herein, since the 2D GT bounding boxes can be used as GT data owing to their accuracy, the computing device 1000 may perform the regression process on each of the 1-st projected 3D LiDAR bounding boxes to fit each of the 1-st projected 3D LiDAR bounding boxes to its corresponding each of 2D GT bounding boxes. For reference, the process of regressing each of the 1-st projected 3D LiDAR bounding boxes will be explained in detail by referring to Fig. 5.

As another example, the computing device 1000 may determine that each of one or more 2-nd 2D GT bounding boxes among the 2D GT bounding boxes is not matched with any one of the projected 3D LiDAR bounding boxes at a step of S200_2.

That is, in this case, at least some of the projected 3D LiDAR bounding boxes are not generated although at least some of specific objects corresponding to the 2-nd 2D GT bounding boxes are detected. In this case, the computing device 1000 may determine said at least some of the specific objects, among the specific objects corresponding to the 2-nd 2D GT bounding boxes, as undetected objects due to the incapability of detecting objects at a long distance.

For this reason, the computing device 1000 may generate each of the pseudo 3D bounding boxes for its corresponding each of the undetected objects by referring to each of the 2-nd 2D GT bounding boxes and each piece of average size information and rotational information for each of the undetected objects, at a step of S210_2.

In detail, the computing device 1000 may generate each piece of predicted positional information corresponding to each of the undetected objects by referring to each piece of the positional information of each of the 2D bounding boxes corresponding to each of the 2-nd 2D GT bounding boxes. Next, the computing device 1000 may confirm each of classes for each of the undetected objects, and then acquire each piece of the average size information and each piece of the rotational information for each of the undetected objects respectively from the 3D LiDAR model and a yaw regression model. Herein, each piece of the average size information is pre-calculated by the 3D LiDAR model.

That is, even though no projected 3D LiDAR bounding boxes for said at least some of specific objects, i.e., the undetected objects, are generated, it is possible to generate each of the specific pseudo 3D bounding boxes corresponding to each of the undetected objects by referring to each piece of the predicted positional information, and each piece of the average size information and the rotational information corresponding to each of the undetected objects. Herein, each actual average size of each of the specific objects may not be directly applied to generate its corresponding each of the specific pseudo 3D bounding boxes. For example, the computing device 1000 may rather (i) acquire each piece of the predicted positional information (of each of the specific pseudo 3D bounding boxes to be generated) corresponding to each piece of the positional information of each of the 2D bounding boxes and (ii) adjust each of the actual average size to acquire each piece of said average size information according to a perspective projection method, by referring to depth information, to thereby generate each of the specific pseudo 3D bounding boxes for each of the undetected objects.

Then, the computing device 1000 may perform the regression process on each of the specific pseudo 3D bounding boxes at a step of S220_2.

Herein, the computing device 1000 may use IOU (i.e., Intersection Over Union) metric to calculate each of matching ratios between each of the specific pseudo 3D bounding boxes and each of the 2-nd 2D GT bounding boxes. Then, based on each of the matching ratios, the computing device 1000 may calculate each distance between each of the specific pseudo 3D bounding boxes and its corresponding each of the 2-nd 2D GT bounding boxes (e.g., between each center point thereof). In response to determining that some of the specific pseudo 3D bounding boxes whose matching ratios with their corresponding 2-nd 2D GT bounding boxes are less than a predetermined threshold ratio (e.g., 100%, but it is not limited thereto), the computing device 1000 may perform the regression process on said some of the specific pseudo 3D bounding boxes to fit them to their corresponding 2-nd 2D GT bounding boxes. For reference, the regression process on said some of the specific pseudo 3D bounding boxes will be explained later.

As still another example, the computing device 1000 may determine that there are 2-nd projected 3D LiDAR bounding boxes (among the projected 3D LiDAR bounding boxes) which are not matched with any one of the 2D GT bounding boxes at a step of S200_3.

In this case, even though the 2-nd projected 3D LiDAR bounding boxes are generated for another some of the specific objects, no 2D GT bounding boxes for said another some of the specific objects are generated. That is, said another some of the specific objects may be considered as false positive objects due to the inaccurate calibration data included in the raw data, as explained in Fig. 3.

Therefore, the computing device 1000 may delete each of the 2-nd projected 3D LiDAR bounding boxes at a step of S210_3, to thereby improve an accuracy of the labeling for generating training data.

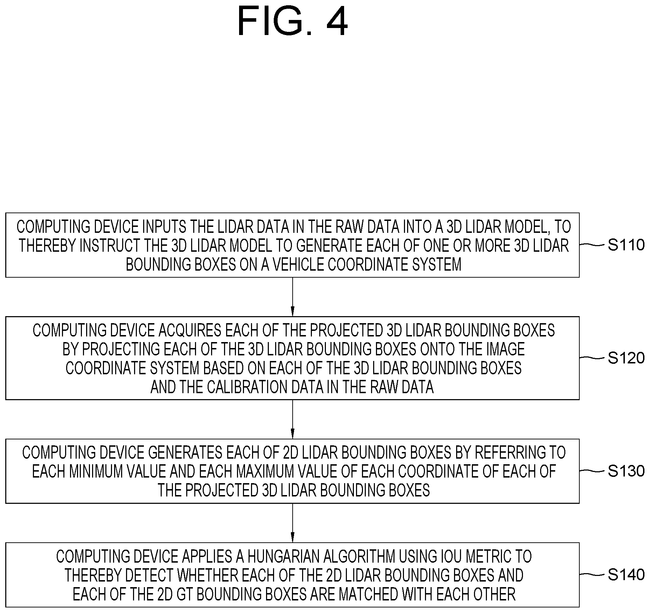

In accordance with one example embodiment of the present disclosure, processes for resolving the aforementioned problems explained in (B) and (C) of Fig. 3 are provided by referring to Figs. 4 to 8.

Fig. 4 is a flow chart schematically illustrating a process of confirming whether each of the 3D LiDAR bounding boxes is matched with each of the 2D GT bounding boxes on the image coordinate system.

By referring to Fig. 4, first, the computing device 1000 may input the LiDAR data in the raw data into the 3D LiDAR model to thereby instruct the 3D LiDAR model to generate each of one or more 3D LiDAR bounding boxes on a vehicle coordinate system at a step of S110. Then, the computing device 1000 may project each of the 3D LiDAR bounding boxes onto the image coordinate system by referring to each of the 3D LiDAR bounding boxes and the calibration data in the raw data, to thereby acquire each of the projected 3D LiDAR bounding boxes, at a step of S120.

Herein, the vehicle coordinate system may refer to a three-dimensional coordinate system defined by a center point of the vehicle as its origin, but it is not limited thereto.

Additionally, the computing device 1000 may generate each of the 2D LiDAR bounding boxes corresponding to each of the projected 3D LiDAR bounding boxes by referring to each minimum value and each maximum value of each coordinate in each of the projected 3D LiDAR bounding boxes at a step of S130. Herein, the computing device 1000 may generate each of the 2D LiDAR bounding boxes so as to surround its corresponding each of the projected 3D LiDAR bounding boxes. Then, the computing device 1000 may apply Hungarian algorithm using IOU metric to each of the 2D LiDAR bounding boxes and each of the 2D GT bounding boxes, thereby determining whether each of the 2D LiDAR bounding boxes and each of the 2D GT bounding boxes are matched with each other, at a step of S140.

The computing device 1000 may output each IOU value of between '0' to '1' as each result of matching each of the 2D LiDAR bounding boxes and its corresponding each of the 2D GT bounding boxes. If it is a first case, i.e., if the IOU value is '0', it represents that a projected 2D bounding box and its corresponding 2D GT bounding box have no overlapped area, and therefore it is considered as the false positive case or the false negative case. If it is a second case, i.e., if the IOU value is larger than '0' and smaller than '1', the computing device 1000 may determine that a projected 2D bounding box and its corresponding 2D GT bounding box represent an identical object although the projected 2D bounding box and its corresponding 2D GT bounding box partially overlap with each other. If it is a third case, i.e., if the IOU value is '1', the computing device 1000 may determine that a projected 2D bounding box and its corresponding 2D GT bounding box represent an identical object because the projected 2D bounding box and its corresponding 2D GT bounding box completely overlap with each other.

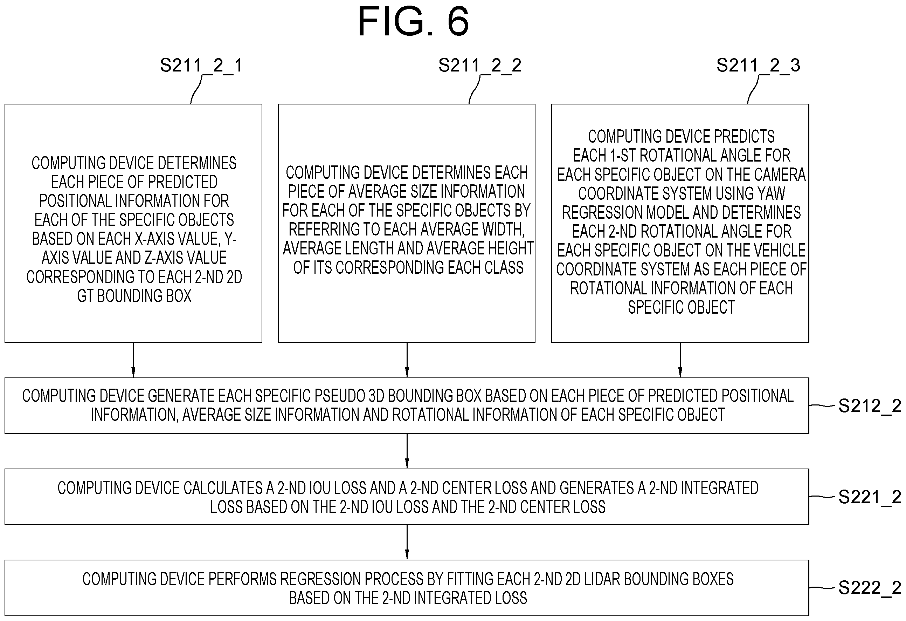

Among these cases, if it is the second case, it is necessary to perform a process of fitting the projected 3D LiDAR bounding box to its corresponding 2D GT bounding box, which will be explained in detail with Fig. 5. Also, if it is the first case, it is necessary to perform the process of generating the pseudo 3D bounding box for its corresponding undetected object, which will be explained in detail in Fig. 6.

Fig. 5 is a flow chart schematically illustrating a process of regressing each of projected 3D LiDAR bounding boxes to thereby fit each of the projected 3D LiDAR bounding boxes to its corresponding 2D GT bounding box.

By referring to Fig. 5, the computing device 1000 may generate each of 1-st 2D LiDAR bounding boxes by referring to each minimum value and each maximum value of each coordinate in its corresponding each of the 1-st projected 3D LiDAR bounding boxes at a step of S211_1.

That is, because it may be relatively easier for the computing device 1000 to fit each of the 1-st 2D LiDAR bounding boxes to its corresponding each of the 1-st 2D GT bounding boxes after generating each of the 1-st 2D LiDAR bounding boxes by referring to each of the 1-st projected 3D LiDAR bounding boxes, than to fit each of the 1-st projected 3D LiDAR bounding boxes into each of the 1-st 2D GT bounding boxes among the GT 2D bounding boxes.

In addition, the computing device 1000 may calculate a 1-st IOU loss and a 1-st center loss and generate a 1-st integrated loss by referring to the 1-st IOU loss and the 1-st center loss at a step of S212_1. Then, the computing device 1000 may perform the regression process by fitting each of the 1-st 2D LiDAR bounding boxes by referring to the 1-st integrated loss at a step of S213_1. Accordingly, the present disclosure can solve the problem of: each of the 1-st projected 3D LiDAR bounding boxes being generated at a distance from its corresponding each of the 1-st 2D GT bounding boxes due to the inaccurate calibration data in the raw data.

In detail, the computing device 1000 may calculate the 1-st IOU loss, which represents the loss related to each of the matching ratios between each of the 1-st 2D LiDAR bounding boxes and each of the 1-st 2D GT bounding boxes, by applying the IOU metric to each of the 1-st 2D LiDAR bounding boxes and each of the 1-st 2D GT bounding boxes. Next, the computing device 1000 may calculate the 1-st center loss by referring to a L1 loss using each absolute value of each difference between each center point of each of the 1-st projected 2D LiDAR bounding boxes and each center point of each of the 1-st 2D GT bounding boxes. Then, the computing device 1000 may generate the 1-st integrated loss by combining the 1-st IOU loss and the 1-st center loss, but it is not limited thereto. Further, the computing device 1000 may perform the regression process by fitting each outline of each of the 1-st 2D LiDAR bounding boxes to each outline of each of the 1-st 2D GT bounding boxes based on the 1-st integrated loss.

Also, the computing device 1000 may update the parameters of the 3D LiDAR model through a process of backpropagation using the 1-st integrated loss at least N times (e.g., 500 times) at a step of S214_1.

Fig. 6 is a flow chart schematically illustrating a process of generating each of the specific pseudo 3D bounding boxes for each of the specific objects where each of the 3D LiDAR bounding boxes is not generated but each of the 2D GT bounding boxes is generated.

By referring to Fig. 6, the computing device 1000 may determine each piece of the predicted positional information of each 3D bounding box for each of the specific objects based on each x-axis value, each y-axis value and each z-axis value corresponding to each of one or more 2-nd 2D GT bounding boxes among the 2D GT bounding boxes at a step of S211_2_1. Next, the computing device 1000 may determine each piece of the average size information for each of the specific objects by referring to each of average widths, average lengths, and average heights of its corresponding each of classes (for each of the specific objects) which were pre-calculated by the 3D LiDAR model based on each of the classes. Then, the computing device 1000 may predict each 1-st rotational angle for each of the specific objects on the camera coordinate system using the yaw regression model and may determine each 2-nd rotational angle for each of the specific objects on the vehicle coordinate system as each piece of the rotational information for each of the specific objects. Herein, said each 2-nd rotational angle can be acquired by referring to said each 1-st rotational angle and the calibration data.

For example, the computing device 1000 may acquire each of the x-axis values and the y-axis values for each piece of the positional information of each of 2D bounding boxes on the image coordinate system, i.e., each piece of the positional information for each of the specific objects, by referring to each of the 2-nd 2D GT bounding boxes among the 2D GT bounding boxes. However, each of the z-axis values for each of the specific objects is necessary to generate each of the specific pseudo 3D bounding boxes for each of the specific objects. Therefore, the computing device 1000 may acquire each of the z-axis values related to each piece of the positional information for each of the 2D bounding boxes on the image coordinate system by referring to each piece of the depth information for each piece of the positional information of each of the 2D bounding boxes on the LiDAR data in the raw data. Then, the computing device 1000 may determine each piece of the predicted positional information for each of the specific objects by referring to each piece of the positional information of each of the 2D bounding boxes, i.e., each of the x-axis values, the y-axis values, and the z-axis values for each of the 2D bounding boxes on the image coordinate system. Herein, each of the x-axis values, the y-axis values, and the z-axis values can be considered as each range of values.

Also, the 3D LiDAR model may be interworked with a database while the 3D LiDAR model repeatedly performs the process of generating each of the 3D LiDAR bounding boxes on the LiDAR data. Herein, the database may store and manage each of the average widths, average lengths, and average heights for each of classes of various objects (e.g., vehicle, truck, human, etc.) corresponding to each of the 3D LiDAR bounding boxes.

Therefore, the computing device 1000 may acquire each of the average widths, the average lengths, and the average heights for each of specific classes (corresponding to each of the specific objects detected in each of the 2-nd 2D GT bounding boxes) pre-calculated by the 3D LiDAR model. Then, the computing device 1000 may determine each piece of the average size information for each of the specific objects based on each of the average widths, the average lengths and the average heights of each of the specific classes for each of the specific objects. As explained with Fig. 2, the average size information is determined according to the perspective projection method using the depth information.

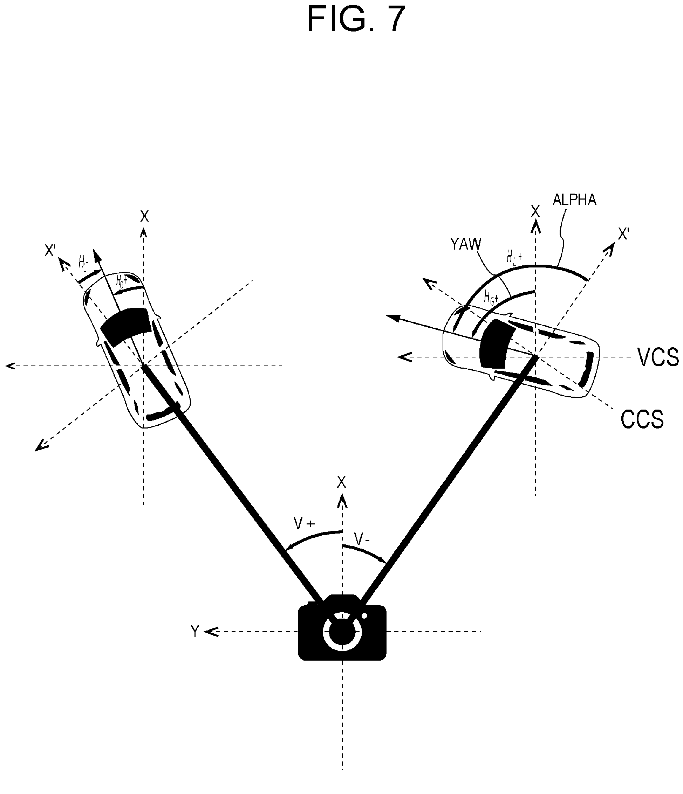

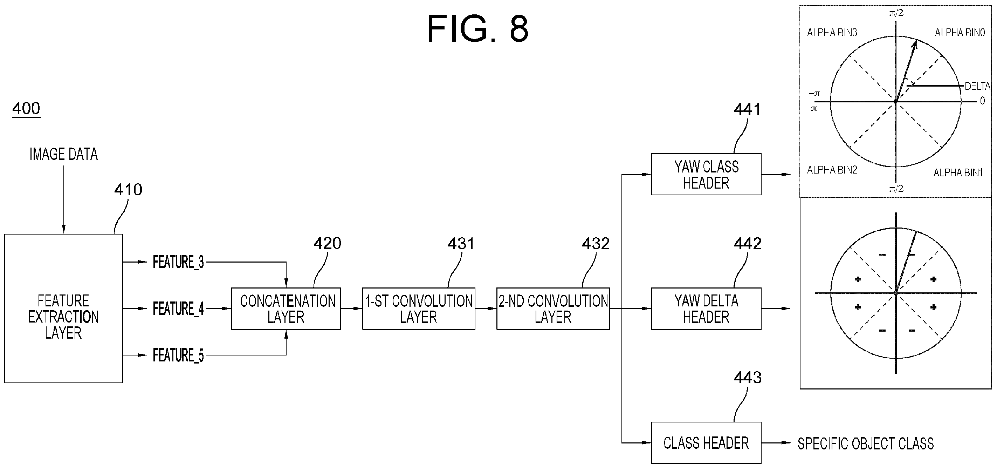

However, in case each piece of the predicted positional information and each piece of the average size information are acquired for each of the specific objects corresponding to each of the 2D GT bounding boxes without its corresponding each piece of the rotational information, each of the specific pseudo 3D bounding boxes may be generated with each randomized rotational angle, such as 45 degrees, 90 degrees, and 180 degrees. To prevent this case, the computing device 1000 may input the image data in the raw data into the yaw regression model, to thereby instruct the yaw regression model to output each of the 1-st rotational angles for each of the specific objects on the camera coordinate system and then convert each of the 1-st rotational angles into each of the 2-nd rotational angles for each of the specific objects on the vehicle coordinate system by additionally applying the calibration data to each of the 1-st rotational angles. Herein, the computing device 1000 may determine each of the 2-nd rotational angles as each piece of the rotational information for each of the specific objects on the vehicle coordinate system. For reference, the camera coordinate system may be a CCS (Camera Coordinate System) which is a three-dimensional coordinate system defined by a position of a lens of the camera as its origin, but it is not limited thereto. The algorithm and the architecture of the yaw regression model will be explained by referring to Figs. 7 and 8.

Fig. 7 is a drawing schematically illustrating a process of predicting yaw, which represents an angle of rotation of a vehicle on a vehicle coordinate system, by using an alpha, which represents an angle of rotation of the vehicle on a camera coordinate system.

In Fig. 7, on the assumption that an x-axis and a y-axis on the vehicle coordinate system are orthogonal to each other, the yaw of the vehicle may be defined as the rotational angle of the vehicle (e.g., the specific object under observation) on the basis of the x-axis or the y-axis. Further, the alpha of the vehicle may be defined as the rotational angle of the vehicle calculated to be relative to each of two orthogonal axes generated based on the direction of the camera taking an image of the vehicle on the camera coordinate system.

Since it is almost impossible for the yaw regression model to directly predict how much the vehicle is rotated on the vehicle coordinate system, i.e. the yaw of the vehicle, it can be implemented by performing a process of predicting the alpha of the vehicle first through a trained model and then a process of converting the alpha of the vehicle into the yaw of the vehicle by applying the calibration data to the alpha of the vehicle. For reference, the alpha of the vehicle is defined as the 1-st rotational angle of the vehicle and the yaw of the vehicle is defined as the 2-nd rotational angle, as explained in Fig. 6.

Fig. 8 is a drawing schematically illustrating an architecture of the yaw regression model configured to predict the alpha.

By referring to Fig. 8, the computing device 1000 may input the image data (in the raw data) into the yaw regression model 400 to thereby instruct the yaw regression model 400 to output each of a feature_3 to a feature_5 through a feature extraction layer 410. Herein, the feature extraction layer 410 may be capable of generating each of a feature_1 to the feature_5, but only the feature_3 to the feature_5 may be selected for subsequent processes. Then, the computing device 1000 may instruct the yaw regression model 400 to perform processes of (i) applying an average pooling operation to the feature_3 and applying an upsampling operation to the feature_5, (ii) applying concatenation operation to the feature_3 to the feature_5 through a concatenation layer 420, thereby generating a fusion feature, and (iii) applying the convolution operation to the fusion feature through each of a 1-st convolution layer 431 and a 2-nd convolution layer 432. Additionally, a mish function can be used as an activation function.

Next, the computing device 1000 may instruct the yaw regression model 400 to perform processes of (i) further applying a global average pooling operation (GAP) to the fusion feature (where the convolution operations were applied) and (ii) inputting the fusion feature (where the convolution operations were applied) into a yaw class header 441, a yaw delta header 442, and a class header 443, to thereby predict the alpha of the vehicle (as the 1-st rotational angle) based on each result from each of the yaw class header 441 and the yaw delta header 442. For reference, the feature extraction layer 410 may include a convolution neural network based on Visual Geometry Group (e.g. RegVGG), but it is not limited thereto.

Also, according to a graph illustrated in Fig. 8 corresponding to the output of the yaw class header 441, how much the vehicle (as the specific object under observation) is rotated on a 360-degree space can be determined by using one of multiple multi-bin classes, i.e., one of '0', '1', `2' and `3' each of which corresponds to each of a first quadrant to a fourth quadrant.

For instance, in case the heading direction of the vehicle corresponds to the first quadrant, the computing device 1000 may instruct the yaw regression model 400 to classify it as '0' class (i.e., Alpha bin0). In addition, the computing device 1000 may instruct the yaw regression model 400 to acquire a 3-rd rotational angle of the vehicle (i.e., a delta shown in Fig. 8) as a rotational angle of the vehicle from a preset reference angle located between 0 degree and -90 degrees corresponding to the '0' class. Herein, the 3-rd rotational angle may be smaller than 90-degree.

Also, if the yaw class header 441 outputs '1', the computing device 1000 may determine that the heading direction of the vehicle corresponds to the fourth quadrant. If the yaw class header 441 outputs '2', the computing device 100 may determine that the heading direction of the vehicle corresponds to a third quadrant. If the yaw class header 441 outputs `3', the computing device 100 may determine that the heading direction of the vehicle corresponds to a second quadrant. For reference, each of the reference angles for each of the multi-bin classes may be determined as 45 degrees, i.e., each center angle for each quadrant, but it is not limited thereto.

Also, by referring to another graph in Fig. 8 which represents an output from the yaw delta header 442, each sign value for each of the multi-bin classes is determined based on its corresponding reference angle.

In detail, the computing device 1000 may instruct the yaw regression model 400 to perform processes of (i) acquiring the sign value corresponding to the heading direction of the vehicle by referring to its corresponding reference angle, (ii) applying the sign value to the 3-rd rotational angle of the vehicle to thereby acquire a 3-rd adjusted rotational angle for the vehicle, and (iii) predicting the alpha, i.e., the 1-st rotational angle of the vehicle, based on the 3-rd adjusted rotational angle and the reference angle.

As one example, on the assumption that (i) the heading direction of the vehicle classified by the yaw class header 441 is the '0' class, (ii) the reference angle for the '0' class is -45 degrees, and (iii) the 3-rd rotational angle of the vehicle, i.e., the delta, is 15 degrees, the yaw regression model 400 may confirm that the sign value for the heading direction of the vehicle is `-` by referring to the output from the yaw delta header 442 and thus acquire -15 degrees as the 3-rd adjusted rotational angle. Then, the yaw regression model 400 may predict that the alpha of the vehicle (i.e., the 1-st rotational angle of the vehicle on the camera coordinate system) is -60 degrees based on the reference angle (i.e., -45 degrees) and the 3-rd adjusted rotational angle (i.e., -15 degrees). Therefore, in response to acquiring the 1-st rotational angle through the yaw regression model 400, the computing device 1000 may apply the calibration data to the 1-st rotational angle, thereby acquiring the yaw of the vehicle (i.e., the 2-nd rotational angle of the vehicle on the vehicle coordinate system).

By referring to Fig. 6 again, the computing device 1000 may generate each of the specific pseudo 3D bounding boxes by referring to each piece of the predicted positional information of each of the 3D bounding boxes, each piece of the average size information and each piece of the rotational information for each of the specific objects, at a step of S212_2. Then, the computing device 1000 may calculate a 2-nd IOU loss and a 2-nd center loss by referring to each matching ratio between each of the specific pseudo 3D bounding boxes and its corresponding each of the 2-nd 2D GT bounding boxes. Then, the computing device 1000 may calculate a 2-nd integrated loss based on the 2-nd IOU loss and the 2-nd center loss at a step of S221_2 and perform the regression process by fitting each of the 2-nd 2D LiDAR bounding boxes based on the 2-nd integrated loss at a step of S222_2. That is, the computing device 1000 may fit each of the specific pseudo 3D bounding boxes to its corresponding each of the 2-nd 2D GT bounding boxes, thereby automatically generating each of pseudo 3D bounding boxes corresponding to each of the undetected objects (undetected by the 3D LiDAR model). Accordingly, an accuracy for matching can be increased and time costs for workers who review the training data can be reduced.

For example, the computing device 1000 may generate each of the specific pseudo 2D bounding boxes by referring to each minimum value and each maximum value of each coordinate in each of the specific pseudo 3D bounding boxes. Then, the computing device 1000 may calculate the 2-nd IOU loss which represents a loss related to each of the matching ratios between each of the specific pseudo 2D bounding boxes and each of the 2-nd 2D GT bounding boxes. Herein, each of the matching ratios is acquired by applying the IOU metric to each of the specific pseudo 2D bounding boxes and each of the 2-nd GT bounding boxes. Next, the computing device 1000 may calculate, as the 2-nd center loss, a L1 loss which is generated by referring to each absolute value of each difference between each center value of each of the specific pseudo 2D bounding boxes and each center point of each of the 2-nd 2D GT bounding boxes. Then, the computing device 1000 may generate the 2-nd integrated loss by referring to the 2-nd IOU loss and the 2-nd center loss. Also, the computing device 1000 may perform the regression process by fitting each outline for each of the specific pseudo 2D bounding boxes to each outline for each of the 2-nd 2D GT bounding boxes based on the 2-nd integrated loss. Herein, a phrase of generating each of the specific pseudo 2D bounding boxes based on each of the minimum values and each of the maximum values of each of the coordinates for each of the specific pseudo 3D bounding boxes may mean generating each of the specific pseudo 2D bounding boxes so as to surround its corresponding each of the specific pseudo 3D bounding boxes, i.e., so as to circumscribe each of the specific pseudo 2D bounding boxes about its corresponding each of the specific pseudo 3D bounding boxes, but it is not limited thereto.

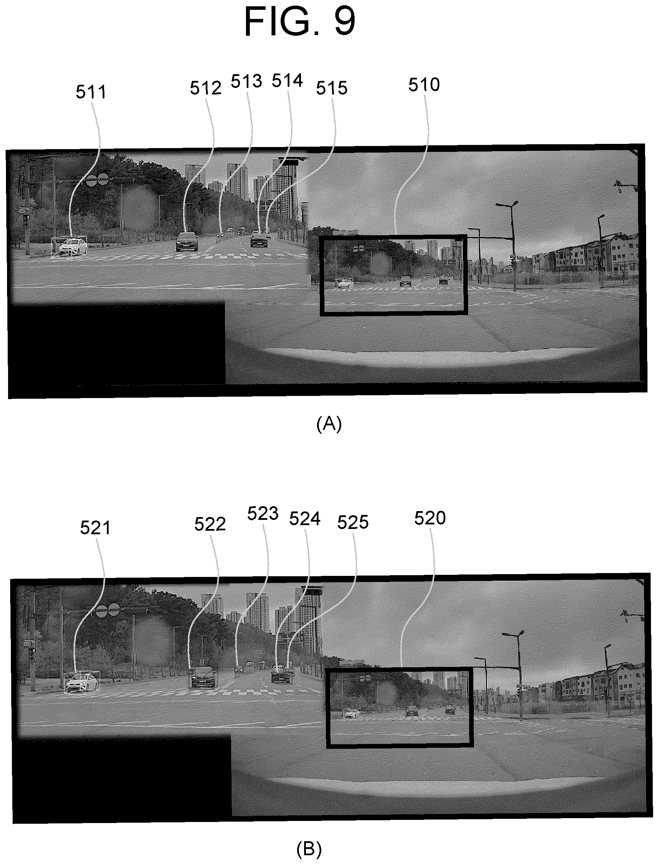

The difference between an example before the labeling process and an example after the labeling process will be explained by referring to Fig. 9.

Fig. 9 is a drawing schematically illustrating results of generating the projected 3D LiDAR bounding boxes before and after applying the processes of the present invention.

As shown (A) of Fig. 9, before the labeling process of the present invention, a 3D LiDAR bounding box outputted from the 3D LiDAR model is displayed as a projected 3D LiDAR bounding box 511 on the image data. In detail, in an area 510 represented as a black rectangle (corresponding to an enlarged area on the left side in (A) of Fig. 9), said one projected 3D LiDAR bounding box 511 is generated for one vehicle (located at the leftmost position), but it is generated at a certain distance from said one vehicle. Further, there are other vehicles 512 to 515 on the image data without any bounding boxes therefor since said other vehicles 512 to 515 have not been detected due to the incapability of the LiDAR for detecting objects at a long distance as explained with Fig. 3.

Meanwhile, by referring to (B) of Fig. 9, after the labeling process of the present invention, in an area 520 represented as a black rectangle (corresponding to an enlarged area on the left side in (B) of Fig. 9), a location of a projected 3D LiDAR bounding box 521 for said one vehicle (located at the leftmost position) has been adjusted, and each of multiple pseudo 3D bounding boxes for each of said other vehicles 522 to 525 on the image data is successfully generated.

The presented invention has an effect of acquiring each of one or more projected 3D LiDAR bounding boxes on an image coordinate system by using raw data including LiDAR data, image data and calibration data, (i) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, to perform a regression process on each of the 1-st projected 3D LiDAR bounding boxes for fitting each of the 1-st projected 3D LiDAR bounding boxes into each of the 1-st 2D GT bounding boxes and (ii) in response to detecting that each of one or more 2-nd 2D GT bounding boxes among the 2D GT bounding boxes is not matched with any one of the projected 3D LiDAR bounding boxes, to generate each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes and then performing the regression process on each of the pseudo 3D bounding boxes for fitting each of the pseudo 3D bounding boxes into each of the 2-nd 2D GT bounding boxes.

The suggested processes, which is in accordance with one example embodiment of the present disclosure, can be implemented in a programmed command which can be performed by various computer component, and can be written on a machine-readable medium or machine-decipherable medium. The machine-readable medium or machine-decipherable medium may include program commands, data files, data structures, or combination of aforementioned elements. The program commands written on the machine-readable medium or machine-decipherable medium may be specifically designed or complied only to perform aforementioned processes or may be allowed to use after notices to those skilled in the art of present disclosure. The machine-readable medium or machine-decipherable medium can be one of follow media: a hard disk, a magnetic medium such as a floppy disk or a magnetic tape, an optical medium such as CD-ROM and DVD, a magnetooptical medium such as a floptical disk, a ROM, a RAM, a Flash memory, and other hardware components which are designed to save and perform the program commands. The program commands may be written in one of complied languages or one of interpreted languages. The hardware device may be configured to perform the process of this disclosure as at least one or more software module, and vice versa.

As seen above, the present disclosure has been explained by specific matters such as detailed components, limited embodiments, and drawings. While the invention has been shown and described with respect to the preferred embodiments, it, however, will be understood by those skilled in the art that various changes and modification may be made without departing from the spirit and scope of the invention as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A method for labeling one or more specific objects by automatically creating one or more specific pseudo 3D bounding boxes, comprising steps of:
(a) a computing device acquiring each of one or more projected 3D LiDAR bounding boxes on an image coordinate system by using raw data including LiDAR data, image data and calibration data, and determining whether each of the projected 3D LiDAR bounding boxes is matched with each of one or more 2D GT bounding boxes on the image coordinate system; and
(b) the computing device executing sub-processes of (b1) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, the computing device performing a regression process on each of the 1-st projected 3D LiDAR bounding boxes for fitting each of the 1-st projected 3D LiDAR bounding boxes into each of the 1-st 2D GT bounding boxes, and (b2) in response to detecting that each of one or more 2-nd 2D GT bounding boxes among the 2D GT bounding boxes is not matched with any one of the projected 3D LiDAR bounding boxes, the computing device generating each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes and then performing the regression process on each of the pseudo 3D bounding boxes for fitting each of the pseudo 3D bounding boxes into each of the 2-nd 2D GT bounding boxes.

2. The method of Claim 1, wherein, at the step (a), the computing device (i) inputs the LiDAR data in the raw data into a 3D LiDAR model, to thereby instruct the 3D LiDAR model to generate each of one or more 3D LiDAR bounding boxes on a vehicle coordinate system, (ii) acquires each of the projected 3D LiDAR bounding boxes by projecting each of the 3D LiDAR bounding boxes onto the image coordinate system based on each of the 3D LiDAR bounding boxes and the calibration data in the raw data, (iii) generates each of 2D LiDAR bounding boxes by referring to each minimum value and each maximum value of each coordinate of each of the projected 3D LiDAR Bounding boxes, and (iv) applies a Hungarian algorithm using IOU(Intersection over Union) metric to thereby detect whether each of the 2D LiDAR bounding boxes and each of the 2D GT bounding boxes are matched with each other.

3. The method of Claim 1, wherein, at the sub-process (b1), the computing device (i) generates each of 1-st 2D LiDAR bounding boxes by referring to each minimum value and each maximum value of each coordinate of each of the 1-st projected 3D LiDAR bounding boxes, (ii) calculates a 1-st IOU loss, which represents a loss related to each of matching ratios between each of the 1-st 2D LiDAR bounding boxes and each of the 1-st 2D GT bounding boxes, by applying IOU metric to each of the 1-st 2D LiDAR bounding boxes and each of the 1-st 2D GT bounding boxes, (iii) calculates a 1-st center loss which is a loss generated based on each difference between each center point of each of the 1-st projected 2D bounding boxes and each center point of each of the 1-st 2D GT bounding boxes, (iv) generates a 1-st integrated loss based on the 1-st IOU loss and the 1-st center loss, (v) performs the regression process based on the 1-st integrated loss by fitting each of the 1-st 2D LiDAR bounding boxes, and (vi) updates parameters of a 3D LiDAR model through backpropagation based on the 1-st integrated loss, wherein the 3D LiDAR model is configured to generate each of one or more 3D LiDAR bounding boxes on a vehicle coordinate system after the LiDAR data in the raw data are inputted.

4. The method of Claim 1, wherein, at the sub-process (b2), the computing device (i) acquires each of x-axis values and each of y-axis values related to each piece of positional information of each of 2D bounding boxes on the image coordinate system for each of the 2-nd 2D GT bounding boxes by referring to each of the 2-nd 2D GT bounding boxes, (ii) acquires each of z-axis values related to each piece of the positional information of each of the 2D bounding boxes on the image coordination system by referring to each piece of depth information of each piece of the positional information of each of the 2D bounding boxes on the LiDAR data in the raw data, (iii) determines each piece of predicted positional information of each of 3D bounding boxes corresponding to each of the specific objects by referring to each piece of the positional information of each of the 2D bounding boxes, (iv) acquires each of average widths, average lengths and average heights corresponding to each of specific object classes pre-calculated by the 3D LiDAR model based on each of the specific object classes corresponding to each of the specific objects, wherein each of the specific object classes is confirmed through each of the 2-nd 2D GT bounding boxes and wherein the 3D LiDAR model is configured to generate each of one or more 3D LiDAR bounding boxes on a vehicle coordinate system after the LiDAR data in the raw data are inputted, (v) determines each piece of the average size information of each of the specific objects by referring to each of the average widths, the average lengths, and the average heights corresponding to each of the specific object classes, (vi) inputs the image data, among the raw data, to a yaw regression model to thereby instruct the yaw regression model to output each of 1-st rotational angles for each of the specific objects on a camera coordinate system, (vii) converts each of the 1-st rotational angles into each of 2-nd rotational angles for each of the specific objects on the vehicle coordinate system by referring to each of the 1-st rotational angles and the calibration data in the raw data, to thereby determine each piece of the rotational information for each of the specific objects, and (viii) generates each of the specific pseudo 3D bounding boxes by referring to each piece of the predicted positional information and each piece of the average size information and the rotational information for each of the specific objects.

5. The method of Claim 4, wherein, at the sub-process (b2), the computing device inputs the image data into the yaw regression model, to thereby instruct the yaw regression model to (i) output each of multiple features, (ii) classify each heading direction of each of the specific objects into each specific multi-bin class among multiple multi-bin classes through each yaw class header after the yaw regression model applies concatenation operations and convolution operations to each of the multiple features, (iii) acquire each of 3-rd rotational angles, which is each rotation angle of each of the specific objects from each of specific reference angles, corresponding to each of the specific objects, among each of reference angles predetermined to correspond to each of the multiple multi-bin classes, (iv) acquire each of specific sign values corresponding to each of the heading directions of each of the specific objects through each of yaw delta headers by referring to each of multiple sign values predetermined based on each of the reference angles of each of the multiple multi-bin classes, (v) acquire each of 3-rd adjusted rotational angles by assigning each of the specific sign values to each of the 3-rd rotational angles, and (vi) predict each of the 1-st rotational angles for each of the specific objects based on each of the 3-rd adjusted rotational angles and the specific reference angles.

6. The method of claim 4, wherein, at the sub-process (b2), in response to detecting that each of the specific pseudo 3D bounding boxes is generated, the computing device (i) calculates each of matching ratios between each of the specific pseudo 3D bounding boxes and each of the 2-nd 2D GT bounding boxes by using IOU metric, and (ii) if some part of the matching ratios is below a predefined threshold, performs the regression process on some part of the specific pseudo 3D bounding boxes corresponding to the some part of the matching ratios.

7. The method of claim 6, wherein, at the sub-process (b2), the computing device (i) generates each of specific pseudo 2D bounding boxes by referring to each minimum value and each maximum value of each coordinate of each of the specific pseudo 3D bounding boxes, (ii) calculates a 2-nd IOU loss, which represents a loss related to each of matching ratios between each of the specific pseudo 2D bounding boxes and each of the 2-nd 2D GT bounding boxes, acquired by applying the IOU metric to each of the specific pseudo 2D bounding boxes and each of the 2-nd 2D GT bounding boxes, (iii) calculates a 2-nd center loss generated based on each difference between each center point of each of the specific pseudo 2D bounding boxes and each center point of each of the 2-nd 2D GT bounding boxes, (iv) generates a 2-nd integrated loss by referring to the 2-nd IOU loss and the 2-nd center loss, and (v) performs the regression process on each of the specific pseudo 2D bounding boxes by fitting each of the specific pseudo 2D bounding boxes based on the 2-nd integrated loss.

8. The method of claim 1, wherein, at the sub-process (b2), in response to detecting that each of one or more 2-nd projected 3D LiDAR bounding boxes among the projected 3D LiDAR bounding boxes is not matched with any of the 2D GT bounding boxes, the computing device deletes each of the 2-nd projected 3D LiDAR bounding boxes.

9. The method of claim 1, wherein, at the step (a), the calibration data include one or more intrinsic parameters and one or more extrinsic parameters of a camera and each transformation parameter for converting each of the LiDAR data into each of the image data.

10. The method of claim 1, wherein each of the 2D GT bounding boxes is obtained based on data generated by acquiring the image data from a camera, detecting each of the specific objects in the image data, and generating each of the 2D bounding boxes for each of the specific objects, through a deep learning model.

11. A computing device for labeling one or more specific objects by automatically creating one or more specific pseudo 3D bounding boxes, comprising:
at least one memory which saves instructions; and
at least one processor configured to execute the instructions to perform or support another device to perform processes of: (I) acquiring each of one or more projected 3D LiDAR bounding boxes on an image coordinate system by using raw data including LiDAR data, image data and calibration data, and determining whether each of the projected 3D LiDAR bounding boxes is matched with each of one or more 2D GT bounding boxes on the image coordinate system; and (II) executing sub-processes of (II_1) in response to detecting that each of one or more 1-st projected 3D LiDAR bounding boxes among the projected 3D LiDAR bounding boxes and each of one or more 1-st 2D GT bounding boxes among the 2D GT bounding boxes are matched with each other, performing a regression process on each of the 1-st projected 3D LiDAR bounding boxes for fitting each of the 1-st projected 3D LiDAR bounding boxes into each of the 1-st 2D GT bounding boxes, and (II_2) in response to detecting that each of one or more 2-nd 2D GT bounding boxes among the 2D GT bounding boxes is not matched with any one of the projected 3D LiDAR bounding boxes, generating each of the specific pseudo 3D bounding boxes corresponding to each of the specific objects by referring to each of the 2-nd 2D GT bounding boxes and each piece of average size information and each piece of rotational information of each of the specific objects corresponding to each of the 2-nd 2D GT bounding boxes, and then performing the regression process on each of the pseudo 3D bounding boxes for fitting each of the pseudo 3D bounding boxes into each of the 2-nd 2D GT bounding boxes.

12. The computing device of Claim 11, wherein, at the process (I), the processor (i) inputs the LiDAR data in the raw data into a 3D LiDAR model, to thereby instruct the 3D LiDAR model to generate each of one or more 3D LiDAR bounding boxes on a vehicle coordinate system, (ii) acquires each of the projected 3D LiDAR bounding boxes by projecting each of the 3D LiDAR bounding boxes onto the image coordinate system based on each of the 3D LiDAR bounding boxes and the calibration data in the raw data, (iii) generates each of 2D LiDAR bounding boxes by referring to each minimum value and each maximum value of each coordinate of each of the projected 3D LiDAR Bounding boxes, and (iv) applies a Hungarian algorithm using IOU(Intersection over Union) metric to thereby detect whether each of the 2D LiDAR bounding boxes and each of the 2D GT bounding boxes are matched with each other.

13. The computing device of Claim 11, wherein, at the sub-process (II_1), the processor (i) generates each of 1-st 2D LiDAR bounding boxes by referring to each minimum value and each maximum value of each coordinate of each of the 1-st projected 3D LiDAR bounding boxes, (ii) calculates a 1-st IOU loss, which represents a loss related to each of matching ratios between each of the 1-st 2D LiDAR bounding boxes and each of the 1-st 2D GT bounding boxes, by applying IOU metric to each of the 1-st 2D LiDAR bounding boxes and each of the 1-st 2D GT bounding boxes, (iii) calculates a 1-st center loss which is a loss generated based on each difference between each center point of each of the 1-st projected 2D bounding boxes and each center point of each of the 1-st 2D GT bounding boxes, (iv) generates a 1-st integrated loss based on the 1-st IOU loss and the 1-st center loss, (v) performs the regression process based on the 1-st integrated loss by fitting each of the 1-st 2D LiDAR bounding boxes, and (vi) updates parameters of a 3D LiDAR model through backpropagation based on the 1-st integrated loss, wherein the 3D LiDAR model is configured to generate each of one or more 3D LiDAR bounding boxes on a vehicle coordinate system after the LiDAR data in the raw data are inputted.

14. The computing device of Claim 11, wherein, at the sub-process (II_2), the processor (i) acquires each of x-axis values and each of y-axis values related to each piece of positional information of each of 2D bounding boxes on the image coordinate system for each of the 2-nd 2D GT bounding boxes by referring to each of the 2-nd 2D GT bounding boxes, (ii) acquires each of z-axis values related to each piece of the positional information of each of the 2D bounding boxes on the image coordination system by referring to each piece of depth information of each piece of the positional information of each of the 2D bounding boxes on the LiDAR data in the raw data, (iii) determines each piece of predicted positional information of each of 3D bounding boxes corresponding to each of the specific objects by referring to each piece of the positional information of each of the 2D bounding boxes, (iv) acquires each of average widths, average lengths and average heights corresponding to each of specific object classes pre-calculated by the 3D LiDAR model based on each of the specific object classes corresponding to each of the specific objects, wherein each of the specific object classes is confirmed through each of the 2-nd 2D GT bounding boxes and wherein the 3D LiDAR model is configured to generate each of one or more 3D LiDAR bounding boxes on a vehicle coordinate system after the LiDAR data in the raw data are inputted, (v) determines each piece of the average size information of each of the specific objects by referring to each of the average widths, the average lengths, and the average heights corresponding to each of the specific object classes, (vi) inputs the image data, among the raw data, to a yaw regression model to thereby instruct the yaw regression model to output each of 1-st rotational angles for each of the specific objects on a camera coordinate system, (vii) converts each of the 1-st rotational angles into each of 2-nd rotational angles for each of the specific objects on the vehicle coordinate system by referring to each of the 1-st rotational angles and the calibration data in the raw data, to thereby determine each piece of the rotational information for each of the specific objects, and (viii) generates each of the specific pseudo 3D bounding boxes by referring to each piece of the predicted positional information and each piece of the average size information and the rotational information for each of the specific objects.

15. The computing device of Claim 14, wherein, at the sub-process (II_2), the processor inputs the image data into the yaw regression model, to thereby instruct the yaw regression model to (i) output each of multiple features, (ii) classify each heading direction of each of the specific objects into each specific multi-bin class among multiple multi-bin classes through each yaw class header after the yaw regression model applies concatenation operations and convolution operations to each of the multiple features, (iii) acquire each of 3-rd rotational angles, which is each rotation angle of each of the specific objects from each of specific reference angles, corresponding to each of the specific objects, among each of reference angles predetermined to correspond to each of the multiple multi-bin classes, (iv) acquire each of specific sign values corresponding to each of the heading directions of each of the specific objects through each of yaw delta headers by referring to each of multiple sign values predetermined based on each of the reference angles of each of the multiple multi-bin classes, (v) acquire each of 3-rd adjusted rotational angles by assigning each of the specific sign values to each of the 3-rd rotational angles, and (vi) predict each of the 1-st rotational angles for each of the specific objects based on each of the 3-rd adjusted rotational angles and the specific reference angles.
